# EUROPEAN PATENT SPECIFICATION

(11) **EP 3 807 630 B1**
(45) Date of publication and mention of the grant of the patent: **08.11.2023**
(21) Application number: 19706421.5
(22) Date of filing: 12.02.2019
(51) Int. Cl.: G01N 29/04, G01N 29/14

(54) **METHOD AND DEVICE FOR DETERMINING THE QUANTITATIVE PROPORTIONS OF A PLURALITY OF FRACTIONS OF A BLEND**
VERFAHREN UND VORRICHTUNG ZUR BESTIMMUNG DER MENGENANTEILE MEHRERER FRAKTIONEN EINER MISCHUNG
PROCÉDÉ ET DISPOSITIF POUR DÉTERMINER LES PROPORTIONS QUANTITATIVES D'UNE PLURALITÉ DE FRACTIONS D'UN MÉLANGE

(30) Priority: 16.06.2018 DE 102018114481
(43) Date of publication of application: 21.04.2021
(73) Proprietor: TIPCO Tudeshki Industrial Process Control GmbH, 52064 Aachen (DE); Knauf Gips KG, 97346 Iphofen (DE)
(72) Inventor: TUDESHKI, Hossein, 52076 Aachen (DE); KOREI, Hessam, 38678 Clausthal- Zellerfeld (DE)
(74) Representative: Kohlmann, Kai
(86) International application number: PCT/EP2019/053406
(87) International publication number: WO 2019/238274

(56) References cited:
- EJAY NSUGBE ET AL: "Particle Size Distribution Estimation of A Mixture of Regular and Irregular Sized Particles Using Acoustic Emissions", PROCEDIA MANUFACTURING, vol. 11, 1 January 2017 (2017-01-01), pages 2252-2259, XP055583451, 43rd North American Manufacturing Research Conference, NAMRC 43, 8-12 June 2015, UNC Charlotte, North Carolina, United States ISSN: 2351-9789, DOI: 10.1016/j.promfg.2017.07.373
- WAGNER CLAAS ET AL: "Acoustic chemometrics for material composition quantification in pneumatic conveying - The critical role of representative reference samp", POWDER TECHNOLOGY - ELECTROSTATIC PHENOMENA IN PARTICULATE PROCESSES, ELSEVIER, BASEL (CH), vol. 237, 22 December 2012 (2012-12-22), pages 506-513, XP028991174, ISSN: 0032-5910, DOI: 10.1016/J.POWTEC.2012.12.036
- UHER MIROSLAV ET AL: "Comparison and cooperation of using camera and acoustic emission for solid particle flow measurement", PROCEEDINGS OF THE 2015 16TH INTERNATIONAL CARPATHIAN CONTROL CONFERENCE (ICCC), IEEE, 27 May 2015 (2015-05-27), pages 558-562, XP033166632, DOI: 10.1109/CARPATHIANCC.2015.7145142 [retrieved on 2015-06-30]

## Description

The invention relates to a method for determining the quantitative proportions of a plurality of fractions of granulates of a blend according to the preamble of claim 1 or claim 2, as well as to a device for carrying out the method.

An essential feature of blends is constituted by the quantitative proportions of the various fractions of granulates which are used in many branches of industry as a measurable parameter for process monitoring, quality control, quality assurance, machine and plant monitoring, as well as machine and plant control. Particularly as regards the control of dressing processes, a knowledge of the quantitative proportions or proportions by mass of the granular fractions of the various mineral raw materials are of particular significance.

Blends are transported by means of various transport systems; as a rule, transport is carried out by conveying a flow hydraulically, pneumatically, by means of continuous conveyors or by free-fall.

The quantitative proportion, also known as the proportion by mass, describes the quantitative composition of the blend formed by the various fractions of granulates. The proportion by mass is defined as the quotient formed by the mass mᵢ, a fraction i under consideration and the mass mⱼ of the other fraction(s) j of the blend under consideration.

Known methods for determining the quantitative proportions require samples to be taken from the blend which are then examined offline in a laboratory. The time lag between taking the sample and testing it through to obtaining the results means that fluctuations in the quantitative proportions are only detected at a later point in time. Because of the time lag, timely control of the processes involved is not possible.

In order to overcome this problem, DE 10 2015 101 537 A1 proposes a method and apparatus for continuously analysing a blend in a conveying flow, which enables the components contained in the conveying flow to be detected and the mass fraction of at least one component to be determined. The conveying flow, which consists of gypsum and anhydrite fractions, for example, is moved continuously over a conveyor line which may be a component of a continuous conveyor. Acoustic sensors for detecting the acoustic emissions, the structure-borne sound and the airborne sound are associated with the conveyor line. Detection of a single component of the blend, as well as determination of the mass fraction of the respective component in the conveying flow is carried out on the basis of individual distinguishing features of the individual components of the blend, which are stored in a control system and compared with the sensor signals.

The quantitative proportions cannot be determined with sufficient accuracy with the known method, because that method is exclusively based on an analysis of the sensor signals.

From WO 2016/026503 A1, a method and an apparatus are known for mixing loose rock material with a fluctuating composition of various mineral components, in order to produce a blend with a quantitative proportion of the components which is as uniform as possible. The loose rock material with a fluctuating composition is deposited onto a conveyor belt from a first container.

With the aid of an acoustic sensor unit disposed downstream of the first container in the conveying direction, different quantities of the individual components of the rock material are deposited onto the conveyor belt from various containers. The controlled addition is intended to produce a constant mix of the blend composed of the various components. In particular, the blend in the first container comprises the mineral raw materials gypsum and anhydrite. The acoustic sensor detects the different frequencies of anhydrite and gypsum in the blend on the basis of a fluctuating signal strength and frequency. The quantitative proportions of gypsum and anhydrite of the blend from the first receptacle are determined on the basis of these signals. As a function of this determination, gypsum or anhydrite is added from the second and third receptacles with quite low accuracy in order to obtain as uniform a mixture as possible of the blend formed from gypsum and anhydrite.

EJAY NSUGBE ET AL: "Particle Size Distribution Estimation of a Mixture of Regular and Irregular Sized Particles Using Acoustic Emissions", PROCEDIA MANUFACTURING, vol. 11,1 January 2017 (2017-01-01), pages 2252-2259, XP055583451,43rd North American Manufacturing Research Conference, NAMRC 43, 8-12 June 2015, UNC Charlotte, North Carolina, United States ISSN: 2351-9789, DOI: 10.1016 / j.promfg. 2017.07.373 discloses the possibility of using acoustic emissions to estimate the particle size distribution of a mixture of a set of glass and polyethylene particles. An experimental rig allows the free fall of continuous stream of particles on a target plate where the acoustic sensor was placed. The flow on the target plate is dispensed at a known rate. By using a time domain multiple threshold method, it was observed the particle size distribution could be estimated. The signal is separated into a high amplitude section corresponding to the impact events from the big particles in the mixture and a low amplitude section corresponding to the smaller particles in the mixture. Within each amplitude section the threshold is varied within each section with an amplitude mean extracted each time this is done. This mean value is then correlated with the mix ratio of the mixture and done continuously for each possible mix ratios which need to be investigated. The best correlation plot is then chosen as the particle size estimation model.

Starting from this prior art, the objective of the invention is to provide a passive acoustic method for determining the quantitative proportions of a plurality of fractions of granulates of a blend, with which, in contrast to the prior art, the quantitative proportions can be determined in real time with significantly greater accuracy by using an advantageous calibration method. In addition, a device for carrying out the method will be proposed.

A passive acoustic method is provided when acoustic signals, which are produced during transport of the blend because grains of the granulate collide with an impact structure, are used for signal processing. The impact structure may be a probe or in fact a component of the transport system.

The invention is based on the knowledge that the passive acoustic signals are dependent on the grain size, the density of the grains of each fraction as well as on the flow energy of the conveying flow. Because the invention takes all of the aforementioned factors into consideration in addition to the acquired signal intensity value, the quantitative proportions of a plurality of fractions of granulates can be continuously determined with great accuracy. The grains of all of the fractions of granulates of the blend are included in the same grain grade. The grain grade includes all grain sizes between a lower and upper proof grain size. The invention is based on the knowledge that the determination of the quantitative proportions becomes even more accurate as the difference between the lower and upper proof grain size of the grain grade which comprises the grains of all fractions of granulates of the blend becomes smaller. In this regard, in principle, larger differences in density between the grains of the fractions allow for a broader spectrum of grains in the grain grade. Taking the aforementioned factors into consideration means that the method can be applied even if the blend comprises practically only one measurable fraction of granulates. As an example, when continuously determining the quantitative proportions of rock material released during geological drilling or in production wells, practically only one fraction can be released at a time. In this case, the method is capable of detecting the mass fraction of this single rock component with certainty, because the aforementioned factors, namely density, grain grade and flow energy are taken into consideration in addition to the acquired signal intensity value.

The flow energy of the blend to be investigated must be kept constant or be known for signal processing. The flow energy of the blend is dependent on the speed and concentration or bulk density of the grains of the blend. In this regard, the flow energy increases with increasing speed and higher concentrations or bulk density. The bulk density is the mass per unit volume of the blend formed by the grains (bulk material) and a continuous fluid which fills the voids between the grains. The bulk density is relevant to the flow energy of a blend transported on a continuous conveyor. The concentration is the mass of the grains of the blend in relation to a transported volume of the solid-liquid mixture during hydraulic transport of the blend and of the solid-gas mixture during pneumatic transport of the blend.

In detail, the objective is achieved by means of a method with the features of claim 1 or claim 2 as well as a device for carrying out the methods with the features of claim 8 or claim 9.

For an accurate and preferably continuous determination of the quantitative proportions, it has been shown that the grain grade of the blend exclusively comprises grains with a coefficient of uniformity C_{U} < 15, preferably C_{U} < 10 or C_{U} < 5. The coefficient of uniformity is a dimensionless parameter which describes how evenly the grain sizes of the blend are distributed. The coefficient of uniformity is defined in DIN EN ISO 14688-2:2004 as the ratio of the diameter d₆₀ for 60% by mass passing through the sieve to the diameter d₁₀ for 10% by mass passing through the sieve: C_{U} = d₆₀/d₁₀.

A value for C_{U} of < 15, preferably C_{U} < 10 or C_{U} < 5, guarantees a uniform granulometry for the blend.

Tests have shown that the grain sizes of the grains of all fractions of the blend (2) are preferably included in the grain grade 0 mm - 60 mm, particularly preferably in the grain grade 0 mm - 32 mm.

Transportation of the solid particles in a fixed conveying direction in the conveying flow is preferably carried out with the aid of a transport system. In particular, the transport system is a belt conveyor or a flow conveyor which transports the grains either pneumatically, i.e. as a solid-gas mixture, or hydraulically, i.e. as a solid-liquid mixture. In addition, the grains may be transported in a conveying direction as a free-falling conveying flow.

In order to obtain reliable results for the quantitative proportions in real time, in a variation of the invention according to claims 1 and 8 the flow energy of the conveying flow is kept constant so that the grains in the conveying flow collide with the impact structure of the acoustic sensor with a constant flow energy.

The flow energy may be kept constant, for example, by continuously mixing the grains of the blend in a mixing chamber of a dispersing unit with a gaseous dispersion medium supplied to the mixing chamber at a constant volumetric flow and in which the outlet from the dispersion unit is configured for dispersion onto the impact structure. The dispersion unit operates in the manner of a jet pump, in which the gaseous dispersion medium supplied to the mixing chamber sucks in the grains of the blend by exchange of momentum, accelerates them and conveys them to the impact structure in the direction of the outlet. The dispersion medium is supplied to the mixing chamber at a constant volumetric flow. As a result of this, the suction power of the dispersion unit is constant, whereupon the disperse phase is conveyed under uniform suction conditions on the suction side of the dispersion unit with constant speed and concentration, i.e. with a constant flow energy in the direction of the impact structure.

If the grains of the blend are conveyed on a continuous conveyor, in particular a belt conveyor, then the flow energy of the blend can be kept constant by keeping the conveying flow of grains on the belt conveyor constant with the aid of a scraper which is fixedly mounted on the frame of the conveyor. In order to keep the flow energy constant under all operational conditions of the conveyor, the scraper is fixedly mounted at a height at which, when taking the maximum expected variations in height of the conveying flow upstream of the scraper into consideration, it is permanently on its surface. Further possibilities for keeping the conveying flow constant are contained in WO 2017/055064.

If it is not possible to keep the conveying flow constant because of the process environment or for other technical reasons, for the purposes of signal processing, the fluctuating value for the flow energy has to be known and taken into consideration. Acquisition of the flow energy of the blend is carried out with the aid of at least one transducer. The transducer is preferably configured as a force transducer with an elastically deformable deformation structure, to which at least one strain gauge is applied, in particular by bonding. The grains of the blend transported in the conveying flow collide with the deformation structure of the force transducer and deform the latter elastically, whereupon the electrical resistance of the strain gauge is altered. During transport of the blend by means of a belt conveyor, the at least one transducer for the flow energy may comprise a conveyor type weigher and a speed sensor for continuously acquiring the mass of the blend and the speed of the belt. The flow energy of the blend can be derived from the mass and the speed.

In order to acquire the acoustic signals and for conversion into electrical signals, a piezoelement in particular may be considered as the oscillation transducer.

The method for determining the quantitative proportions requires a prior calibration:
For a conveying flow with a constant flow energy, the calibration function(s) are generated prior to the start of the control signal processing by determining a correlation between the electrical signals from each oscillation transducer and the quantitative proportions which are determined with a conventional method for determining the quantitative proportions of the fractions of the blends with the aid of a sample or which are known from the mix in the sample. Examples of conventional methods for determining the quantitative proportions that may be considered are grading methods which are based on separating the grains of the various fractions of the sample on the basis of their chemical and/or physical properties. A separation may, for example, be carried out in accordance with the density, the magnetizability or the electrical properties.

If the flow energy of the conveying flow is not constant, then in a first step prior to starting the control signal processing, a normalization function must be generated and in a second step, the calibration function must be generated:
The normalization function is generated in the first step, in which a relationship is determined between the electrical signals from the at least one transducer and the flow energy of the conveying flow for different known flow energies of the blend. In this manner, for a uniform bulk density or concentration, consistent grain grade and uniform quantitative proportion, the speed of the conveying flow can be varied as the only variable parameter in order to determine the relevant correlation for the normalization function.

In order to generate the calibration function, in the second step, a correlation is determined between the electrical signals from the oscillation transducer, normalized as regards energy with the normalization function taking the flow energy into consideration, and the quantitative proportions which have been determined with a conventional method for determining the quantitative proportions of the fractions of the blend with the aid of a sample or which are known because of the mix in the sample.

Examples of conventional methods for determining the quantitative proportions which may be considered are grading methods which are based on separating the grains of the various fractions on the basis of their chemical and/or physical properties. A separation may, for example, be carried out in accordance with the density, the magnetizability or the electrical properties.

For both a constant and non-constant conveying flow, the acquisition of the acoustic signals during calibration and the conventional determination of the quantitative proportions relate to an essentially consistent collective body of grains from the conveying flow, i.e. each sample for the conventional method for determining the quantitative proportion is taken from the immediate spatial vicinity of the oscillation transducer during acquisition of the acoustic signals.

The claimed advantageous calibration method based on a signal classification is defined by the features of independent claim 1. The signal classification is based on the knowledge that fluctuations in the quantitative proportions can be detected better in higher signal intensity value regions. For the calibration, a plurality of samples is tested, wherein the quantitative proportions of the fractions of granulates in the test samples must be different. The grains of the plurality of granulate fractions from each sample have a different density. All of the grains of the plurality of samples are comprised in the same grain grade and the difference in density in the grains of the plurality of granulate fractions is consistent in all of the samples.

If the flow energy during calibration on the basis of a signal classification is not constant, each calibration function is generated using the energy-normalized electrical signals from each oscillation transducer as defined by the features of independent claim 2.

If the flow energy of the conveying flow is constant, the control signal processing of the electrical signals for determining the quantitative proportions is carried out in accordance with the features of claim 3.

If the flow energy of the conveying flow is not constant, the control signal processing of the electrical signals for determining the quantitative proportions is carried out in accordance with the features of claim 4. The flow energy of the conveying flow is acquired continuously and taken into consideration by the energy normalization of the electrical signals by means of the normalization function.

In order to ensure that the grains of all of the fractions of the granulates of the blend to be tested belong to the same grain grade, in one embodiment of the invention, the step for providing the blend comprises a classification in accordance with grain size. Next, the acoustic signals of the pre-classified blend are acquired. The classification is, for example, carried out during sieve classification or air separation.

The invention will now be described in more detail with reference to the figures, in which:
- **Figures 1a) - d)**: show various exemplary embodiments of devices for carrying out the method in accordance with the invention,
- **Figure 2 to Figure 7**: show the signal processing during calibration, and
- **Figure 8**: shows several calibration functions as a basis for control signal processing.

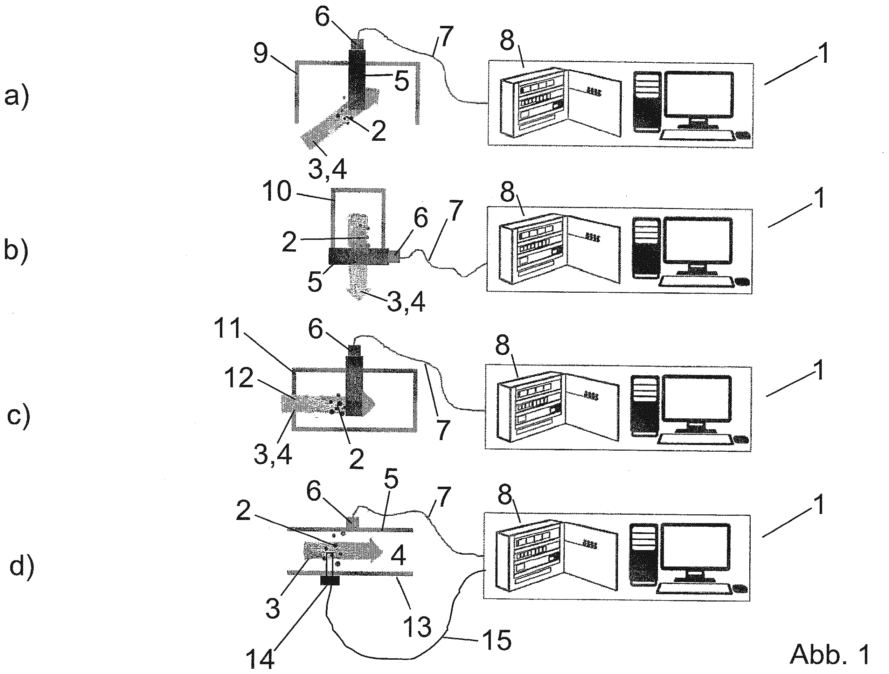

Figures 1a) to 1d) show different devices (1) for carrying out the method in accordance with the invention for continuously determining the quantitative proportions of a plurality of granulate fractions of a blend (2). All of the devices (1) comprise conveyor equipment for transporting the blend (2) in a conveying direction (3) in a conveying flow (4), an impact structure (5) disposed in the conveying flow (4), which produces acoustic signals due to the collision of grains of the blend (2), an oscillation transducer (6) connected to each impact structure (5), the oscillation transducer (6) being connected to a signal processing unit (8) via a signal line (7). The signal processing unit (8) is configured to signal process the electrical signals from each oscillation transducer (6), in order to continuously determine the quantitative proportions of the various fractions of the blend (2), the grains of which belong to the same grain grade, but differ in density.

In the embodiment of Figure 1 a), the conveyor equipment is configured as a belt conveyor in order to move the blend (2) in the conveying direction (3). The rod-shaped impact structure (5) is disposed on a fixture (9) disposed above the belt conveyor; the impact structure extends in the vertical direction into the blend (2) transported on the belt conveyor. The belt conveyor conveys the blend (2) at a constant flow energy, in which the conveying flow (4) of grains of the blend (2) on the conveyor belt is kept constant with the aid of a scraper (not shown) disposed upstream of the impact structure (5) and fixedly mounted on the frame of the conveyor. The rod-shaped impact structure (5) acts as a waveguide to transmit the acoustic signals in the direction of its upper end face to which the oscillation transducer (6) is fastened.

Figure 1 b) shows a variation of the device of Figure 1 a), in which the impact structure (5) is disposed behind a handover (10) of the belt conveyor in the free-falling conveying flow (4) of the blend (2). The scraper to keep the conveying flow (4) constant in this case is preferably mounted a short distance upstream of the handover (10).

In the embodiment of Figure 1 c), the flow energy of the conveying flow (4) is kept constant by mixing the grains of the blend (3), in a mixing chamber (11) of a dispersion unit, with a gaseous dispersion medium supplied to the mixing chamber (11) at a constant volumetric flow. The dispersion unit operates like a jet pump. The gaseous dispersion medium supplied to the mixing chamber (11) sucks in the grains of the blend (2) by exchange of momentum at a suction side (12) of the mixing chamber (11) and accelerates and conveys the blend (2) in the direction of the rod-shaped impact structure (5). The constant volumetric flow of the dispersion medium gives rise to steady suction conditions at the suction side (12), whereupon the conveying flow (4) is conveyed at a constant speed and concentration, i.e. a constant flow energy, in the direction of the impact structure (5). The rod-shaped impact structure (5) acts as a waveguide to transmit the acoustic signals in the direction of its upper end face to which the oscillation transducer (6) is fastened. The blend (2) supplied to the dispersion unit may, for example, be sucked in from a continuous belt-linked conveying flow of the blend. Suction may, for example, be carried out by means of suction equipment floating on the conveying flow.

Figure 1 d) shows a device for pneumatic transport of the blend (2). The oscillation transducer (6) is disposed on the sheath of a pipeline (13) for pneumatic transport. The pipeline (13) is simultaneously the impact structure (5) with which grains of the blend (2) collide and produce acoustic signals which propagate in the pipeline (13) as structure-bound sound waves and are converted into electrical signals by the oscillation transducer (6). The flow energy of the conveying flow (4) which fills the cross section of the pipe can vary during pneumatic conveying. Thus, it is necessary to acquire the flow energy of the conveying flow (4). Acquisition of the flow energy is carried out in the exemplary embodiment of Figure 1 d) by means of a force transducer (14) disposed in the immediate vicinity of the oscillation transducer (6) on the pipeline (13) and at a fixed location relative to the conveying flow (4). In the conveying flow (4), transported grains of the blend (2) collide with the rod-shaped elastic deformation structure of the force transducer (14) extending into the interior of the pipeline (13) and deforms the deformation structure elastically, whereupon the electrical resistance of at least one strain gauge of the force transducer (14) applied to the deformation structure fluctuates to a greater or lesser extent as a function of the magnitude of the flow energy of the conveying flow (4). The fluctuating signal at the strain gauge is transmitted to the signal processing unit (8) by means of a further signal line (15). The determination of the quantitative proportions of the fractions of the blend (2) is carried out in the signal processing unit (8), taking into account the electrical signals of the oscillation transducer (6) as well as of the force transducer (14).

If the flow energy of the conveying flow is not constant, as is the case with the exemplary embodiment of Figure 1 d), the signal processing of the electrical signals from the oscillation transducer (6) in order to determine the quantitative proportions is carried out using a pre-determined normalization function. The flow energy of the conveying flow (4) is acquired continuously by means of the force transducer (14) and taken into consideration during the energy normalization of the electrical signal from the oscillation transducer (6) by means of a normalization function.

If, however, the flow energy of the conveying flow is constant, as is the case with the exemplary embodiments of Figures 1 a) - c), then the control signal processing of the electrical signals for determining the quantitative proportions is carried out by applying at least one previously determined calibration function. An acquisition of the flow energy and taking it into consideration during acquisition and evaluation of the electrical signals from the oscillation transducer is not necessary.

The required generation of a calibration function prior to control signal processing is preferably carried out taking the intensity values of the signals into consideration, as follows:
For the optionally energy-normalized calibration, a plurality of samples is tested, wherein the quantitative proportions of the granulate fractions in the samples to be tested must be different. The grains of the plurality of granulate fractions of each sample have different densities. All of the grains of the plurality of samples are comprised in the same grain grade and the differences in density of the grains of the plurality of granulate fractions are consistent in all of the samples. However, it is difficult to keep the quantitative proportions of the individual fractions entirely constant in the various samples. In order to neutralize these variations, a statistically significant number of data points which take the possible variations of the individual fractions into consideration has to be used in the calibration.

It has been shown that variations in the quantitative proportions can be detected better at high intensity values Iₙ of the cumulative relative frequency of acquired electrical signals, wherein "n" is the percentage proportion of the intensity value which is smaller than or the same as the intensity value Iₙ. In this regard, during calibration, preferably, intensity values Iₙ from the upper range of the cumulative relative frequency of the acquired electrical signals for the various samples are selected, for example three intensity values Iₙ from the upper region of the intensity values, e.g. I50, I75 and I95. For an intensity value I50, 50% of the intensity values are smaller than the intensity value I50. For an intensity value I75, 75% of the intensity values are smaller than the intensity value I75, and for an intensity value of I95, 95% of the intensity values are smaller than the intensity value I95.

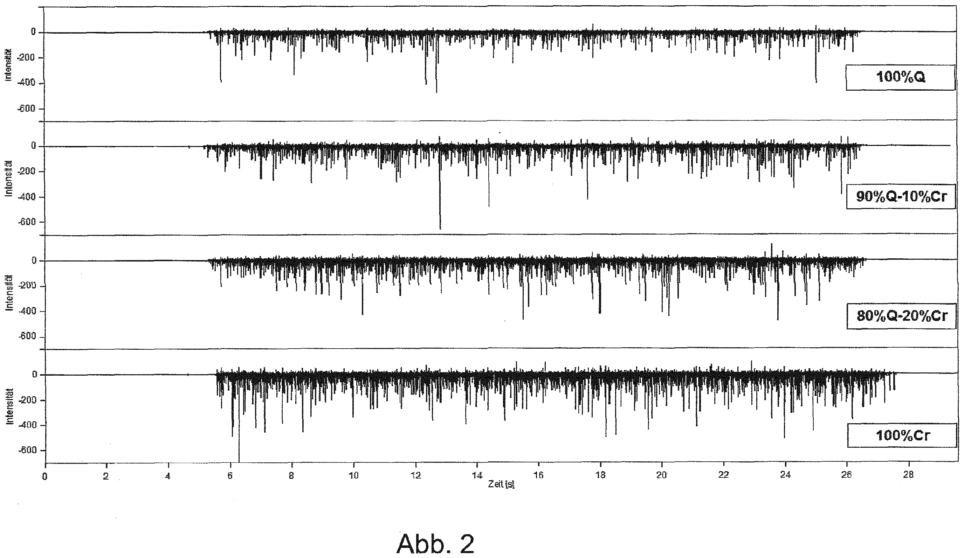

The procedure for signal processing during calibration will now be explained in more detail with the aid of Figures 2 to 7:
Using the oscillation transducer (6), the structure-borne sound resulting from the impact of grains from each sample colliding with the impact structure (5) is acquired as an analogue signal. The analogue signal is sampled at a sampling rate of 51200 Hertz, for example, using an analogue to digital converter (A/D converter) and converted into a time-dependent digital electrical raw signal.

For a non-constant flow energy of the conveying flow (4), the electrical raw signals are normalized with the previously generated normalization function, in order to eliminate the dependency of the electrical raw signals from the oscillation transducer (6) on the flow energy. For a constant flow energy, the normalization is omitted.

Figure 2 shows the optionally energy-normalized and filtered raw signals for four different samples of 100% quartz sand, 90% quartz sand and 10% chromite sand, 80% quartz sand and 20% chromite sand as well as 100% chromite sand. Filtering can be carried out with a band pass filter in order to reduce interfering noise which is not initiated by the impact of grains of the blend, but by environmental noise.

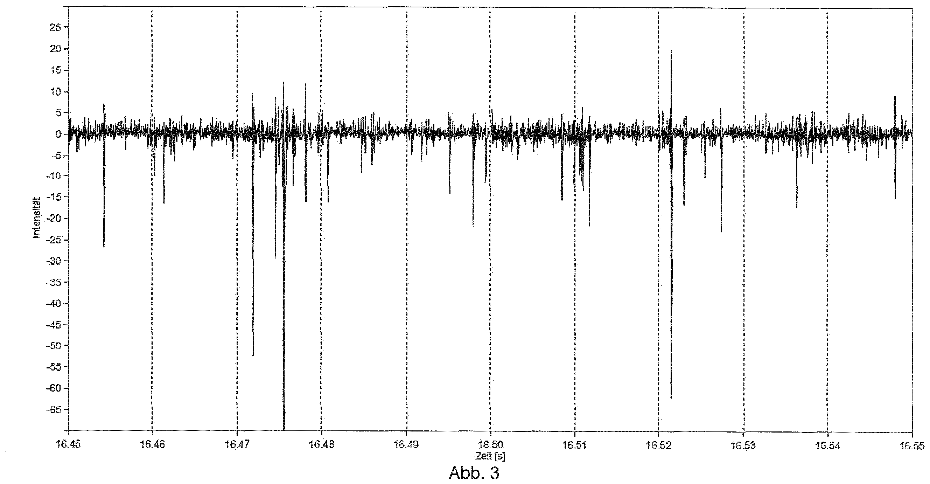

Figure 3 illustrates the windowing of the filtered raw signal from a sample. The length of the time window into which the electrical raw signal is divided is set by windowing. In the exemplary embodiment, the electrical raw signal is divided into time windows with a consistent length, for example 10 ms.

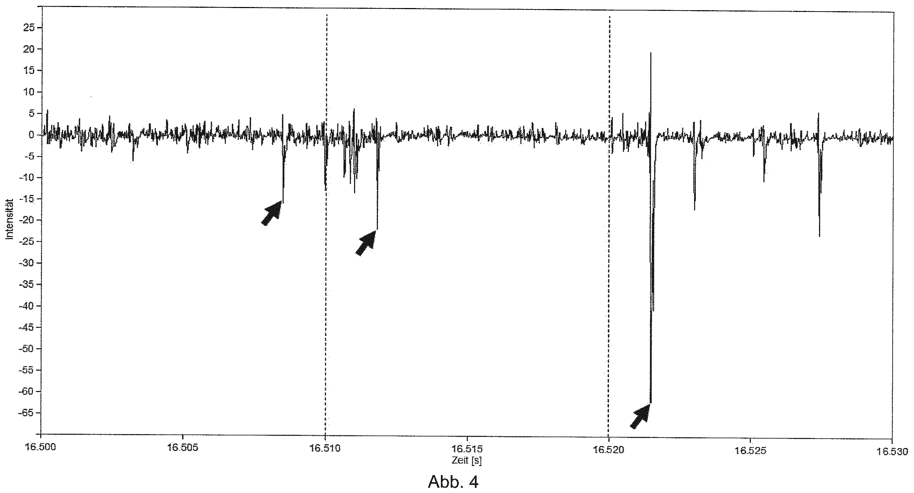

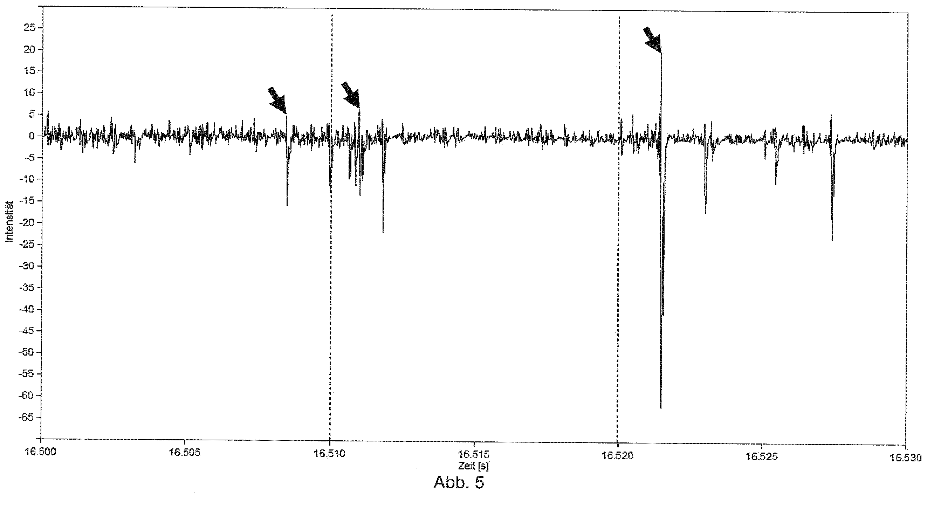

Figures 4 and 5 illustrate the identification of the minimum negative intensity values or the maximum positive intensity values of the electrical signals in each time window. Whether the most pronounced intensity values are more in the positive region or more in the negative region or are balanced in both the positive and in the negative regions depends on the disposition of the oscillation transducer (6) and the impact structure (5) in the conveying flow (4).

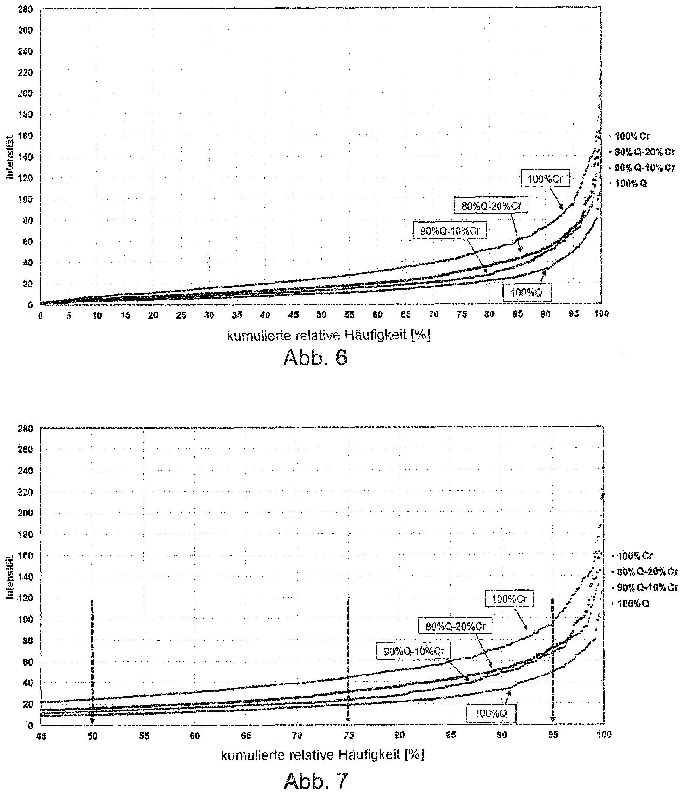

Figure 6 shows the cumulative relative frequency of the determined maximum positive intensity values in the windows for all four samples. Figure 7 documents the section of the cumulative relative frequency of the maximum positive intensity values in the upper intensity value region, namely the I50, I75 and I95 intensity values for the four samples.

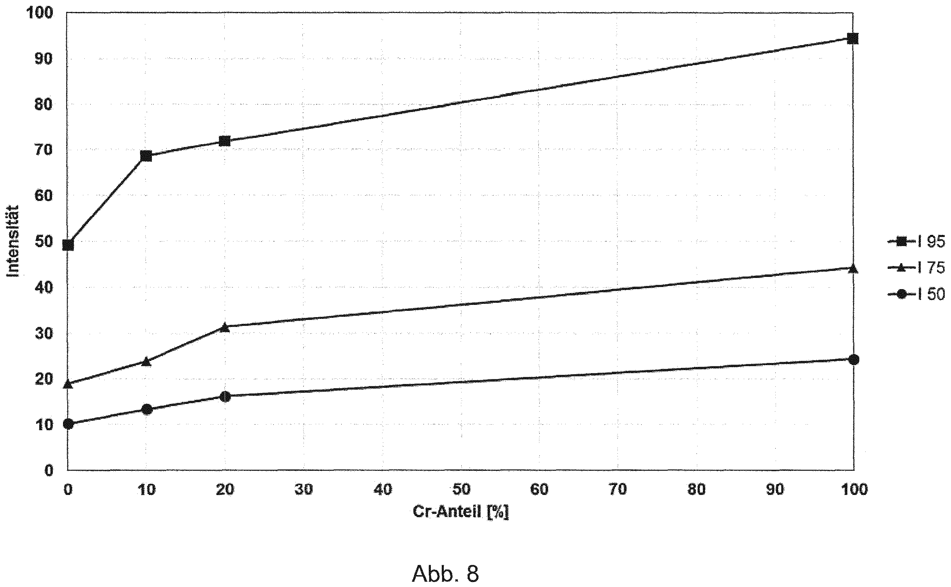

Finally, Figure 8 shows three calibration functions for determining the proportion of chromite sand in the blend, which have been generated on the basis of the I50, I75 and I95 intensity values for the cumulative relative frequency of the maximum positive intensity values determined in the windows for the four samples, as follows: for each sample, the known chromite sand proportion as a percentage is allocated to the I50 intensity value for each sample. The nexus of the pair of values formed by the I50 intensity value and the proportion of chromite sand for the four samples produces the calibration function for the I50 intensity values. In the same manner, the calibration functions for the I75, I95 intensity values are generated from the pairs of values formed by the I75, I95 intensity values and the proportion of chromite sand for the four samples. The proportion of chromite sand and the proportion of quartz sand for each sample are determined using a conventional method for determining the quantitative proportions or are known because the mix in the sample is known.

The control signal processing of the electrical signals from the oscillation transducer (6) for determining the quantitative proportion comprises the following steps:
With the oscillation transducer (6), the structure-borne sound resulting from the impact of the grains of the blend colliding with the impact structure (5) is acquired as an analogue signal. The analogue signal is sampled at a sampling rate of 51200 Hertz, for example, using an analogue to digital converter (A/D converter) and converted into digital time-dependent electrical raw signals.

The electrical raw signals are normalized with the previously generated normalization function for non-constant flow energy of the conveying flow (4) in order to eliminate the dependency of the acquired electrical raw signals from the oscillation transducer (6) from the flow energy. For a constant flow energy, the normalization is omitted.

The optionally energy-normalized and filtered electrical raw signals may be filtered with a band pass filter in order to reduce interfering noise which is not initiated by the impact of the grains of the blend, but instead by environmental noise.

The electrical raw signals from a measurement period are windowed by dividing the electrical signals into time windows with consistent lengths of 10 ms, for example.

Next, for each time window of the measurement period, the maximum intensity value for positive intensity values of the electrical raw signal is determined. The number of determined maximum intensity values corresponds to the number of time windows during a measurement period for acquiring the raw signals.

Subsequently, the cumulative relative frequency of the determined maximum positive intensity values in the windows is determined.

From the cumulative relative frequency of the determined maximum positive intensity values in the windows, a plurality of intensity values Iₙ is determined from the upper region of the intensity values, wherein "n" is the percentage proportion of the intensity values which are smaller than or equal to the intensity value Iₙ; in the exemplary embodiment, these are the I50, I75 and I95 intensity values.

The quantitative proportion of the fractions of the granulates of the blend is determined with the aid of the determined I50, I75, I95 intensity values from the corresponding calibration functions of Figure 8. The three values for the quantitative proportion which are determined with the different calibration functions are then averaged. The mean reflects the final result, the quantitative proportion, with great accuracy.

### LIST OF REFERENCE NUMERALS

| | |
|---|---|
| device | 1 |
| blend | 2 |
| conveying direction | 3 |
| conveying flow | 4 |
| impact structure | 5 |
| oscillation transducer | 6 |
| signal line | 7 |
| signal processing unit | 8 |
| fixture | 9 |
| handover | 10 |
| mixing chamber | 11 |
| suction side | 12 |
| pipeline | 13 |
| force transducer | 14 |
| signal line | 15 |

## Claims

1. A method for determining the quantitative proportions of a plurality of granulate fractions of a blend (2), comprising the steps of:
- providing the blend (2), wherein the grains of each fraction have a different density and the grain size of the grains of all fractions of the blend (2) are comprised in the same grain grade,
- transporting the blend (2) in a conveying direction (3) in a conveying flow (4) with a constant flow energy, wherein grains of the blend (2) collide with at least one impact structure (5) configured as a waveguide and produce acoustic signals which propagate in each impact structure (5) as structure-borne sound waves,
- acquiring the acoustic signals and conversion into electrical signals with the aid of an oscillation transducer (6), and
- signal processing the electrical signals from the oscillation transducer (6) in order to determine the quantitative proportions.
**characterized by** the following steps for generating a calibration function prior to starting the signal processing for a conveying flow (4) with a constant flow energy:
- testing a plurality of samples of the blend (2), wherein the quantitative proportions of the fractions in the individual samples are different and are determined with a conventional method or are known, as follows:
- dividing the converted electrical signals from the oscillation transducer (6) into time windows for each sample,
- identifying a minimum negative intensity value of the electrical signal or a maximum positive intensity value of the electrical signal in all time windows for each sample,
- determining a cumulative relative frequency for the maximum or minimum intensity values of the electrical signal for each sample,
- determining an intensity value Iₙ from the cumulative relative frequency of the maximum or minimum intensity values of the electrical signal for each sample, wherein the value "n" is the percentage proportion of the intensity value which is smaller than or equal to the intensity value Iₙ, and the value "n" of the intensity value Iₙ for each sample is equal to 50% or higher and is consistent for all samples, and
- generating the calibration function by allocating the previously determined intensity value Iₙ for each sample to the known quantitative proportions of the fractions of the granulates for the respective sample.

2. A method for determining the quantitative proportions of a plurality of granulate fractions of a blend (2), comprising the steps of:
- providing the blend (2), wherein the grains of each fraction have a different density and the grain size of the grains of all fractions of the blend (2) are comprised in the same grain grade,
- transporting the blend (2) in a conveying direction (3) in a conveying flow (4) with a known flow energy, wherein grains of the blend (2) collide with at least one impact structure (5) configured as a waveguide and produce acoustic signals which propagate in each impact structure (5) as structure-borne sound waves,
- acquiring the acoustic signals and conversion into electrical signals with the aid of an oscillation transducer (6), and
- signal processing the electrical signals from the oscillation transducer (6) in order to determine the quantitative proportions
**characterized by** the following steps for generating a calibration function prior to beginning the signal processing for a conveying flow (4) with a non-constant flow energy:
- generating at least one normalization function, in which a relationship is determined between the electrical signals from at least one transducer (14) for acquiring the flow energy and the flow energy of the conveying flow (4) for different known flow energies of the blend,
- testing a plurality of samples of the blend (2), wherein the quantitative proportions of the fractions in the individual samples are different and are determined with a conventional method or are known, as follows:
- converting the electrical signals from the oscillation transducer (6) for each sample with the normalization function,
- dividing the electrical signals from the oscillation transducer (6) for each sample energy-normalized with the normalization function into time windows,
- identifying a minimum negative intensity value of the electrical signal or a maximum positive intensity value of the electrical signal in all time windows for each sample,
- determining a cumulative relative frequency for the maximum or minimum intensity values of the electrical signals for each sample,
- determining an intensity value Iₙ from the cumulative relative frequency of the maximum or minimum intensity values of the electrical signal for each sample, wherein the value "n" is the percentage proportion of the intensity value that is smaller than or equal to the intensity value Iₙ, and the value "n" of the intensity value Iₙ for each sample is equal to 50% or higher and is consistent for all samples, and
- generating the calibration function by allocating the previously determined intensity value Iₙ for each sample to the known quantitative proportions of the fractions of the respective sample.

3. The method as claimed in claim 1, **characterized in that** the signal processing of the electrical signals for determining the quantitative proportions comprises the following steps:
- dividing the electrical signals converted by the oscillation transducer (6) into time windows,
- identifying a minimum negative intensity value of the electrical signal or a maximum positive intensity value of the electrical signal in each time window of a measurement period,
- determining a cumulative relative frequency for the maximum or minimum intensity values of the electrical signal during the measurement period,
- determining an intensity value Iₙ from the cumulative relative frequency for the maximum or minimum intensity values of the electrical signal, wherein the value "n" is the percentage proportion of the intensity values which is less than or equal to the intensity value Iₙ, and the value "n" of the intensity value Iₙ is consistent with the intensity value Iₙ at the basis of the generation of the calibration function,
- determining the quantitative proportion of the fractions of the blend (2) by applying the calibration function to the determined intensity value Iₙ.

4. The method as claimed in claim 2, **characterized in that** the signal processing of the electrical signals for determining the quantitative proportions comprises the following steps:
- acquiring the flow energy of the conveying flow (4) and conversion into electrical signals with the aid of the at least one transducer (14),
- converting the electrical signals from the oscillation transducer (6) with the normalization function taking the acquired flow energy into consideration,
- dividing the energy-normalized electrical signals converted by the oscillation transducer into time windows,
- identifying a minimum negative intensity value of the electrical signal or a maximum positive intensity value of the electrical signal in each time window of a measurement period,
- determining a cumulative relative frequency for the maximum or minimum intensity values of the electrical signal during the measurement period,
- determining an intensity value Iₙ from the cumulative relative frequency for the maximum or minimum intensity values of the electrical signal, wherein the value "n" is the percentage proportion of the intensity values which is less than or equal to the intensity value Iₙ, and the value "n" for the intensity value Iₙ is consistent with the intensity value Iₙ at the basis of generating the calibration function,
- determining the quantitative proportion of the fractions of the blend (2) by applying the calibration function to the determined intensity value Iₙ.

5. The method as claimed in one of claims 1 to 4, **characterized in that** the step of providing the blend (2) comprises classification according to grain size.

6. The method as claimed in one of claims 1 to 5, **characterized in that** the grain grade of the blend (2) exclusively comprises grains with a coefficient of uniformity C_{U} < 15.

7. The method as claimed in one of claims 1 to 6, **characterized in that** the grain size of the grains comprises all fractions of the blend (2) from the grain grade 0 mm - 60 mm.

8. A device (1) configured for carrying out the method as claimed in claim 3, comprising
- conveyor equipment for transporting the blend in a conveying direction (3) in a conveying flow (4),
- at least one impact structure (5) disposed in the conveying flow (4), which produces acoustic signals due to colliding grains of the blend (2),
- an oscillation transducer (6) connected to the impact structure (5) for acquiring the acoustic signals and conversion into electrical signals,
- a signal processing unit (8) configured for signal processing of the electrical signals from each oscillation transducer (2) for the continuous determination of the quantitative proportions as claimed in claim 3 and
- control means configured to keep the flow energy of the conveying flow (4) constant.

9. A device (1) configured for carrying out the method as claimed in claim 4, comprising
- conveyor equipment for transporting the blend in a conveying direction (3) in a conveying flow (4),
- at least one impact structure (5) disposed in the conveying flow (4), which produces acoustic signals due to colliding grains of the blend (2),
- an oscillation transducer (6) connected to the impact structure (5) for acquiring the acoustic signals and conversion into electrical signals,
- a signal processing unit (8) configured for signal processing of the electrical signals from each oscillation transducer (2) for the continuous determination of the quantitative proportions as claimed in claim 4 and
- at least one transducer (14) which is configured to detect the flow energy of the conveying flow (4).

## Patentansprüche

1. Verfahren zum Bestimmen der Mengenverhältnisse mehrerer Fraktionen von Granulaten eines Gemenges (2), umfassend die Schritte:
- Bereitstellen des Gemenges (2), wobei die Körner jeder Fraktion eine unterschiedliche Dichte aufweisen und die Korngröße der Körner sämtlicher Fraktionen des Gemenges (2) von derselben Kornklasse umfasst sind,
- Transportieren des Gemenges (2) in einer Förderrichtung (3) in einem Förderstrom (4) mit einer konstanten Strömungsenergie, wobei Körner des Gemenges (2) mit mindestens einem als Wellenleiter eingerichteten Anprallkörper (5) kollidieren und akustische Signale erzeugen, die sich in jedem Anprallkörper (5) als Körperschallwellen ausbreiten,
- Erfassen der akustischen Signale und Umformen in elektrische Signale mit Hilfe eines Schwingungsaufnehmers (6) und
- Signalverarbeitung der elektrischen Signale des Schwingungsaufnehmers (6) zur Bestimmung der Mengenverhältnisse;
**gekennzeichnet durch** die folgenden Schritte zum Erstellen einer Kalibrierfunktion vor Beginn der Signalverarbeitung für einen Förderstrom (4) mit konstanter Strömungsenergie:
- Untersuchen mehrerer Proben des Gemenges (2), wobei die Mengenverhältnisse der Fraktionen in den einzelnen Proben unterschiedlich sind und mit einer herkömmlichen Methode bestimmt werden oder bekannt sind, wie folgt:
- Aufteilen der umgeformten elektrischen Signale von dem Schwingungsaufnehmer (6) in Zeitfenster zu jeder Probe,
- Auffinden eines minimalen negativen Intensitätswertes des elektrischen Signals oder eines maximalen positiven Intensitätswertes des elektrischen Signals in sämtlichen Zeitfenstern jeder Probe,
- Bestimmen einer kumulierten relativen Häufigkeit der maximalen oder minimalen Intensitätswerte des elektrischen Signals zu jeder Probe,
- Bestimmen eines Intensitätswerts Iₙ aus der kumulierten relativen Häufigkeit der maximalen oder minimalen Intensitätswerte des elektrischen Signals zu jeder Probe, wobei der Wert "n" der prozentuale Anteil des Intensitätswerts ist, der kleiner oder gleich dem Intensitätswert Iₙ ist, und der Wert "n" des Intensitätswerts Iₙ zu jeder Probe größer oder gleich 50 % ist und für sämtliche Proben übereinstimmt, und
- Erstellen der Kalibrierungsfunktion durch Zuordnen des zuvor bestimmten Intensitätswerts Iₙ jeder Probe zu den bekannten Mengenverhältnissen der Fraktionen der Granulate der jeweiligen Probe.

2. Verfahren zum Bestimmen der Mengenverhältnisse mehrerer Fraktionen von Granulaten eines Gemenges (2), umfassend die Schritte:
- Bereitstellen des Gemenges (2), wobei die Körner jeder Fraktion eine unterschiedliche Dichte aufweisen und die Korngröße der Körner sämtlicher Fraktionen des Gemenges (2) von derselben Kornklasse umfasst sind,
- Transportieren des Gemenges (2) in einer Förderrichtung (3) in einem Förderstrom (4) mit einer bekannten Strömungsenergie, wobei Körner des Gemenges (2) mit mindestens einem als Wellenleiter eingerichteten Anprallkörper (5) kollidieren und akustische Signale erzeugen, die sich in jedem Anprallkörper (5) als Körperschallwellen ausbreiten,
- Erfassen der akustischen Signale und Umformen in elektrische Signale mit Hilfe eines Schwingungsaufnehmers (6) und
- Signalverarbeitung der elektrischen Signale des Schwingungsaufnehmers (6) zur Bestimmung der Mengenverhältnisse;
**gekennzeichnet durch** die folgenden Schritte zum Erstellen einer Kalibrierfunktion vor Beginn der Signalverarbeitung für einen Förderstrom (4) mit nicht konstanter Strömungsenergie:
- Erstellen mindestens einer Normierfunktion, indem ein Zusammenhang zwischen den elektrischen Signalen mindestens eines Messgrößenaufnehmers (14) zur Erfassung der Strömungsenergie und der Strömungsenergie des Förderstroms (4) bei unterschiedlichen, bekannten Strömungsenergien des Gemenges bestimmt wird,
- Untersuchen mehrerer Proben des Gemenges (2), wobei die Mengenverhältnisse der Fraktionen in den einzelnen Proben unterschiedlich sind und mit einer herkömmlichen Methode bestimmt werden oder bekannt sind, wie folgt:
- Umformen der elektrischen Signale des Schwingungsaufnehmers (6) zu jeder Probe mit der Normierfunktion,
- Aufteilen der mit der Normierfunktion energienormierten elektrischen Signale des Schwingungsaufnehmers (6) zu jeder Probe in Zeitfenster,
- Auffinden eines minimalen negativen Intensitätswertes des elektrischen Signals oder eines maximalen positiven Intensitätswertes des elektrischen Signals in allen Zeitfenstern jeder Probe,
- Bestimmen einer kumulierten relativen Häufigkeit der maximalen oder minimalen Intensitätswerte der elektrischen Signale zu jeder Probe,
- Bestimmen eines Intensitätswerts Iₙ aus der kumulierten relativen Häufigkeit der maximalen oder minimalen Intensitätswerte des elektrischen Signals zu jeder Probe, wobei der Wert "n" der prozentuale Anteil des Intensitätswerts ist, der kleiner oder gleich dem Intensitätswert Iₙ ist, und der Wert "n" des Intensitätswerts Iₙ zu jeder Probe größer oder gleich 50 % ist und für sämtliche Proben übereinstimmt, und
- Erstellen der Kalibrierungsfunktion durch Zuordnen des zuvor bestimmten Intensitätswerts Iₙ jeder Probe zu den bekannten Mengenverhältnissen der Fraktionen der Granulate der jeweiligen Probe.

3. Verfahren nach Anspruch 1, **dadurch gekennzeichnet, dass** die Signalverarbeitung der elektrischen Signale zur Bestimmung der Mengenverhältnisse die folgenden Schritte umfasst:
- Aufteilen der von dem Schwingungsaufnehmer (6) umgeformten elektrischen Signale in Zeitfenster,
- Auffinden eines minimalen negativen Intensitätswertes des elektrischen Signals oder eines maximalen positiven Intensitätswertes des elektrischen Signals in jedem Zeitfenster einer Messperiode,
- Bestimmen einer kumulierten relativen Häufigkeit der maximalen oder minimalen Intensitätswerte des elektrischen Signals während der Messperiode,
- Bestimmen eines Intensitätswerts Iₙ aus der kumulierten relativen Häufigkeit der maximalen oder minimalen Intensitätswerte des elektrischen Signals, wobei der Wert "n" der prozentuale Anteil der Intensitätswerte ist, der kleiner oder gleich dem Intensitätswert Iₙ ist, und der Wert "n" des Intensitätswerts Iₙ mit dem der Erstellung der Kalibrierfunktion zugrundeliegenden Intensitätswert Iₙ übereinstimmt,
- Bestimmen des Mengenverhältnisses der Fraktionen des Gemenges (2) durch Anwenden der Kalibrierfunktion auf den bestimmten Intensitätswert Iₙ.

4. Verfahren nach Anspruch 2, **dadurch gekennzeichnet, dass** die Signalverarbeitung der elektrischen Signale zur Bestimmung der Mengenverhältnisse die folgenden Schritte umfasst:
- Erfassen der Strömungsenergie des Förderstroms (4) und Umformen in elektrische Signale mit Hilfe des mindestens einen Messgrößenaufnehmers (14),
- Umformen der elektrischen Signale des Schwingungsaufnehmers (6) mit der Normierfunktion unter Berücksichtigung der erfassten Strömungsenergie,
- Aufteilen der von dem Schwingungsaufnehmer umgeformten energienormierten elektrischen Signale in Zeitfenster,
- Auffinden eines minimalen negativen Intensitätswertes des elektrischen Signals oder eines maximalen positiven Intensitätswertes des elektrischen Signals in jedem Zeitfenster einer Messperiode,
- Bestimmen einer kumulierten relativen Häufigkeit der maximalen oder minimalen Intensitätswerte des elektrischen Signals während der Messperiode,
- Bestimmen eines Intensitätswerts Iₙ aus der kumulierten relativen Häufigkeit der maximalen oder minimalen Intensitätswerte des elektrischen Signals, wobei der Wert "n" der prozentuale Anteil der Intensitätswerte ist, der kleiner oder gleich dem Intensitätswert Iₙ ist, und der Wert "n" des Intensitätswerts Iₙ mit dem der Erstellung der Kalibrierfunktion zugrundeliegenden Intensitätswert Iₙ übereinstimmt,
- Bestimmen des Mengenverhältnisses der Fraktionen des Gemenges (2) durch Anwenden der Kalibrierfunktion auf den bestimmten Intensitätswert Iₙ.

5. Verfahren nach einem der Ansprüche 1 bis 4, **dadurch gekennzeichnet, dass** der Schritt des Bereitstellens des Gemenges (2) ein Klassieren nach der Korngröße umfasst.

6. Verfahren nach einem der Ansprüche 1 bis 5, **dadurch gekennzeichnet, dass** die Kornklasse des Gemenges (2) ausschließlich Körner umfasst, deren Ungleichförmigkeitszahl Cu < 15 ist.

7. Verfahren nach einem der Ansprüche 1 bis 6, **dadurch gekennzeichnet, dass** die Korngröße der Körner sämtlicher Fraktionen des Gemenges (2) von der Kornklasse 0 mm - 60 mm umfasst sind.

8. Vorrichtung (1), eingerichtet zur Durchführung des Verfahrens nach Anspruch 3, umfassend
- eine Fördereinrichtung zum Transportieren des Gemenges in einer Förderrichtung (3) in einem Förderstrom (4),
- mindestens einen in dem Förderstrom (4) angeordneten Anprallkörper (5), der akustische Signale aufgrund kollidierender Körner des Gemenges (2) erzeugt,
- einen mit dem Anprallkörper (5) verbundenen Schwingungsaufnehmer (6) zum Erfassen der akustischen Signale und Umformen in elektrische Signale,
- eine Signalverarbeitungseinheit (8), eingerichtet zur Signalverarbeitung der elektrischen Signale jedes Schwingungsaufnehmers (2) zur kontinuierlichen Bestimmung der Mengenverhältnisse nach Anspruch 3 und
- Steuermittel, eingerichtet die Strömungsenergie des Förderstroms (4) konstant zu halten.

9. Vorrichtung (1), eingerichtet zur Durchführung des Verfahrens nach Anspruch 4, umfassend
- eine Fördereinrichtung zum Transportieren des Gemenges in einer Förderrichtung (3) in einem Förderstrom (4),
- mindestens einen in dem Förderstrom (4) angeordneten Anprallkörper (5), der akustische Signale aufgrund kollidierender Körner des Gemenges (2) erzeugt,
- einen mit dem Anprallkörper (5) verbundenen Schwingungsaufnehmer (6) zum Erfassen der akustischen Signale und Umformen in elektrische Signale,
- eine Signalverarbeitungseinheit (8), eingerichtet zur Signalverarbeitung der elektrischen Signale jedes Schwingungsaufnehmers (2) zur kontinuierlichen Bestimmung der Mengenverhältnisse nach Anspruch 4 und
- zumindest einen Messgrößenaufnehmer (14), eingerichtet zur Erfassung der Strömungsenergie des Förderstroms (4).

## Revendications

1. Procédé de détermination des proportions quantitatives d'une pluralité de fractions de granulats d'un mélange (2), comprenant les étapes suivantes :
- la fourniture du mélange (2), dans lequel les grains de chaque fraction ont une densité différente et les tailles de grains des grains de toutes les fractions du mélange (2) sont comprises dans le même grade de grains,
- le transport du mélange (2) dans une direction de convoyage (3) dans un flux de convoyage (4) avec une énergie de flux constante, dans lequel des grains du mélange (2) entrent en collision avec au moins une structure d'impact (5) configurée en tant qu'un guide d'onde et produisent des signaux acoustiques qui se propagent dans chaque structure d'impact (5) en tant qu'ondes sonores portées par structure,
- l'acquisition des signaux acoustiques et leur conversion en signaux électriques à l'aide d'un transducteur d'oscillation (6), et
- le traitement de signal des signaux électriques provenant du transducteur d'oscillation (6) afin de déterminer les proportions quantitatives,
**caractérisé par** les étapes suivantes pour générer une fonction d'étalonnage avant le démarrage du traitement de signal pour un flux de convoyage (4) avec une énergie de flux constante :
- le test d'une pluralité d'échantillons du mélange (2), dans lequel les proportions quantitatives des fractions dans les échantillons individuels sont différentes et sont déterminées avec une méthode conventionnelle ou sont connues, comme suit :
- la division des signaux électriques convertis depuis le transducteur d'oscillation (6) en fenêtres temporelles pour chaque échantillon,
- l'identification d'une valeur d'intensité négative minimale du signal électrique ou d'une valeur d'intensité positive maximale du signal électrique dans toutes les fenêtres temporelles pour chaque échantillon,
- la détermination d'une fréquence relative cumulée pour les valeurs d'intensité maximale ou minimale du signal électrique pour chaque échantillon,
- la détermination d'une valeur d'intensité Iₙ à partir de la fréquence relative cumulée des valeurs d'intensité maximale ou minimale du signal électrique pour chaque échantillon, dans lequel la valeur « n » est la proportion en pourcentage de la valeur d'intensité qui est inférieure ou égale à la valeur d'intensité Iₙ, et la valeur « n » de la valeur d'intensité Iₙ pour chaque échantillon est supérieure ou égale à 50 % et est cohérente pour tous les échantillons, et
- la génération de la fonction d'étalonnage par l'allocation de la valeur d'intensité Iₙ précédemment déterminée pour chaque échantillon aux proportions quantitatives connues des fractions des granulats pour l'échantillon respectif.

2. Procédé de détermination des proportions quantitatives d'une pluralité de fractions de granulats d'un mélange (2), comprenant les étapes suivantes :
- la fourniture du mélange (2), dans lequel les grains de chaque fraction ont une densité différente et les tailles de grains des grains de toutes les fractions du mélange (2) sont comprises dans le même grade de grains,
- le transport du mélange (2) dans une direction de convoyage (3) dans un flux de convoyage (4) avec une énergie de flux connue, dans lequel des grains du mélange (2) entrent en collision avec au moins une structure d'impact (5) configurée en tant qu'un guide d'onde et produisent des signaux acoustiques qui se propagent dans chaque structure d'impact (5) en tant qu'ondes sonores portées par structure,
- l'acquisition des signaux acoustiques et leur conversion en signaux électriques à l'aide d'un transducteur d'oscillation (6), et
- le traitement de signal des signaux électriques provenant du transducteur d'oscillation (6) afin de déterminer les proportions quantitatives,
**caractérisé par** les étapes suivantes pour générer une fonction d'étalonnage avant le démarrage du traitement de signal pour un flux de convoyage (4) avec une énergie de flux non constante :
- la génération d'au moins une fonction de normalisation, dans laquelle une relation est déterminée entre les signaux électriques provenant d'au moins un transducteur (14) pour acquérir l'énergie de flux et l'énergie de flux du flux de convoyage (4) pour différentes énergies de flux connues du mélange,
- le test d'une pluralité d'échantillons du mélange (2), dans lequel les proportions quantitatives des fractions dans les échantillons individuels sont différentes et sont déterminées avec une méthode conventionnelle ou sont connues, comme suit :
- la conversion des signaux électriques provenant du transducteur d'oscillation (6) pour chaque échantillon avec la fonction de normalisation,
- la division des signaux électriques provenant du transducteur d'oscillation (6) pour chaque échantillon d'énergie normalisée avec la fonction de normalisation en fenêtres temporelles,
- l'identification d'une valeur d'intensité négative minimale du signal électrique ou d'une valeur d'intensité positive maximale du signal électrique dans toutes les fenêtres temporelles pour chaque échantillon,
- la détermination d'une fréquence relative cumulée pour les valeurs d'intensité maximale ou minimale des signaux électriques pour chaque échantillon,
- la détermination d'une valeur d'intensité Iₙ à partir de la fréquence relative cumulée des valeurs d'intensité maximale ou minimale du signal électrique pour chaque échantillon, dans lequel la valeur « n » est la proportion en pourcentage de la valeur d'intensité qui est inférieure ou égale à la valeur d'intensité Iₙ, et la valeur « n » de la valeur d'intensité Iₙ pour chaque échantillon est supérieure ou égale à 50 % et est cohérente pour tous les échantillons, et
- la génération de la fonction d'étalonnage par l'allocation de la valeur d'intensité Iₙ précédemment déterminée pour chaque échantillon aux proportions quantitatives connues des fractions de l'échantillon respectif.

3. Procédé selon la revendication 1, **caractérisé en ce que** le traitement de signal des signaux électriques pour déterminer les proportions quantitatives comprend les étapes suivantes :
- la division des signaux électriques convertis par le transducteur d'oscillation (6) en fenêtres temporelles,
- l'identification d'une valeur d'intensité négative minimale du signal électrique ou d'une valeur d'intensité positive maximale du signal électrique dans chaque fenêtre temporelle d'une période de mesure,
- la détermination d'une fréquence relative cumulée pour les valeurs d'intensité maximale ou minimale du signal électrique au cours de la période de mesure,
- la détermination d'une valeur d'intensité Iₙ à partir de la fréquence relative cumulée des valeurs d'intensité maximale ou minimale du signal électrique, dans lequel la valeur « n » est la proportion en pourcentage des valeurs d'intensité qui est inférieure ou égale à la valeur d'intensité Iₙ, et la valeur « n » de la valeur d'intensité Iₙ est cohérente avec la valeur d'intensité Iₙ à la base de la génération de la fonction d'étalonnage,
- la détermination de la proportion quantitative des fractions du mélange (2) par l'application de la fonction d'étalonnage à la valeur d'intensité Iₙ déterminée.

4. Procédé selon la revendication 2, **caractérisé en ce que** le traitement de signal des signaux électriques pour déterminer les proportions quantitatives comprend les étapes suivantes :
- l'acquisition de l'énergie de flux du flux de convoyage (4) et leur conversion en signaux électriques à l'aide de l'au moins un transducteur (14),
- la conversion des signaux électriques provenant du transducteur d'oscillation (6) avec la fonction de normalisation en tenant compte de l'énergie de flux acquise,
- la division des signaux électriques d'énergie normalisée convertis par le transducteur d'oscillation en fenêtres temporelles,
- l'identification d'une valeur d'intensité négative minimale du signal électrique ou d'une valeur d'intensité positive maximale du signal électrique dans chaque fenêtre temporelle d'une période de mesure,
- la détermination d'une fréquence relative cumulée pour les valeurs d'intensité maximale ou minimale du signal électrique au cours de la période de mesure,
- la détermination d'une valeur d'intensité Iₙ à partir de la fréquence relative cumulée des valeurs d'intensité maximale ou minimale du signal électrique, dans lequel la valeur « n » est la proportion en pourcentage des valeurs d'intensité qui est inférieure ou égale à la valeur d'intensité Iₙ, et la valeur « n » de la valeur d'intensité Iₙ est cohérente avec la valeur d'intensité Iₙ à la base de la génération de la fonction d'étalonnage,
- la détermination de la proportion quantitative des fractions du mélange (2) par l'application de la fonction d'étalonnage à la valeur d'intensité Iₙ déterminée.

5. Procédé selon l'une des revendications 1 à 4, **caractérisé en ce que** l'étape de la fourniture du mélange (2) comprend la classification selon une taille de grain.

6. Procédé selon l'une des revendications 1 à 5, **caractérisé en ce que** le grade de grains du mélange (2) comprend exclusivement des grains avec un coefficient d'uniformité Cᵤ < 15.

7. Procédé selon l'une des revendications 1 à 6, **caractérisé en ce que** la taille de grain des grains comprend toutes les fractions du mélange (2) du grade de grains de 0 mm à 60 mm.

8. Dispositif (1) configuré pour réaliser le procédé selon la revendication 3, comprenant :
- un équipement de convoyage pour transporter le mélange dans une direction de convoyage (3) dans un flux de convoyage (4),
- au moins une structure d'impact (5) disposée dans le flux de convoyage (4), qui produit des signaux acoustiques sous l'effet de la collision de grains du mélange (2),
- un transducteur d'oscillation (6) relié à la structure d'impact (5) pour acquérir les signaux acoustiques et les convertir en signaux électriques,
- une unité de traitement de signal (8) configurée pour le traitement de signal des signaux électriques provenant de chaque transducteur d'oscillation (2) pour la détermination continue des proportions quantitatives selon la revendication 3, et
- des moyens de commande configurés pour maintenir l'énergie de flux du flux de convoyage (4) constante.

9. Dispositif (1) configuré pour réaliser le procédé selon la revendication 4, comprenant :
- un équipement de convoyage pour transporter le mélange dans une direction de convoyage (3) dans un flux de convoyage (4),
- au moins une structure d'impact (5) disposée dans le flux de convoyage (4), qui produit des signaux acoustiques sous l'effet de la collision de grains du mélange (2),
- un transducteur d'oscillation (6) relié à la structure d'impact (5) pour acquérir les signaux acoustiques et les convertir en signaux électriques,
- une unité de traitement de signal (8) configurée pour le traitement de signal des signaux électriques provenant de chaque transducteur d'oscillation (2) pour la détermination continue des proportions quantitatives selon la revendication 4, et
- au moins un transducteur (14) qui est configuré pour détecter l'énergie de flux du flux de convoyage (4).
